# EUROPEAN PATENT SPECIFICATION

(11) **EP 2 674 335 B1**
(45) Date of publication and mention of the grant of the patent: **13.02.2019**
(21) Application number: 13171516.1
(22) Date of filing: 11.06.2013
(51) Int. Cl.: B60T 7/08, B60T 7/10

(54) **Handbrake**
Handbremse
Frein à main

(30) Priority: 13.06.2012 GB 201210433
(43) Date of publication of application: 18.12.2013
(73) Proprietor: Nissan Motor Manufacturing (UK) Ltd., Cranfield Bedfordshire MK43 0DB (GB)
(72) Inventor: Hobbs, Dave, Cranfield Bedfordshire MK430DB (GB)

(56) References cited:
- EP-A1- 0 565 768
- EP-A1- 0 978 432
- WO-A2-2005/120914
- DE-A1- 3 210 402
- DE-A1- 4 228 381
- KR-A- 20040 037 820
- KR-A- 20080 038 833
- US-A1- 2003 111 901

## Description

### Technical Field of the Invention

The present invention relates to a handbrake for a vehicle, and in particular to a handbrake incorporating a release mechanism; and also to a vehicle incorporating such a handbrake.

### Background to the Invention

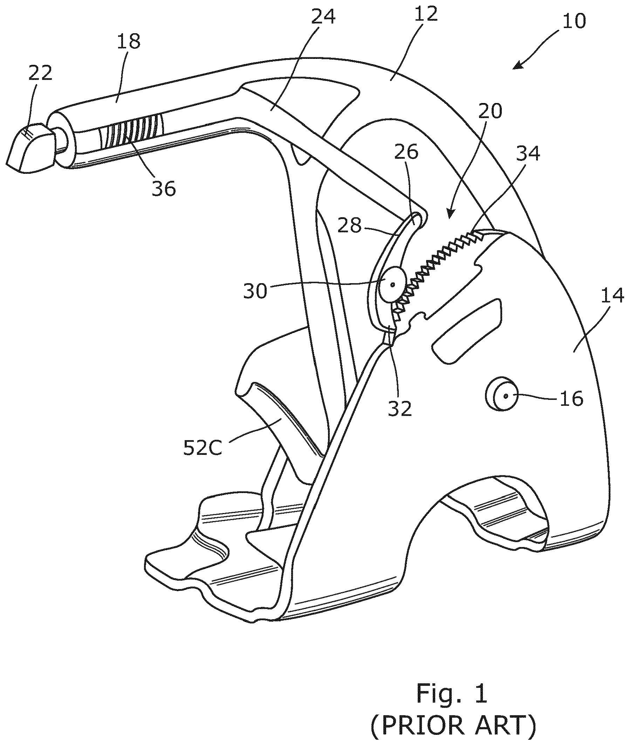

Most vehicles have a parking brake that can be actuated when the vehicle is stationary to prevent the vehicle rolling. Often the parking brake is applied and released by means of a hand actuated lever assembly; and is then commonly referred to as a handbrake. A typical known handbrake lever assembly 10 is shown in Figure 1, which is a perspective, partly sectioned view of the assembly. The assembly comprises a handbrake lever 12 pivotally mounted to a bracket 14 by means of a pivot pin 16. The bracket 14 is attached to a floor assembly of a vehicle (not shown), usually by welding or being bolted.

The handbrake lever 12 includes a tubular handgrip portion 18 that can be grasped by a user and pulled upwardly to move the lever from a brake-off position, as shown in Figure 1, to a brake-on position by rotating the lever about the pivot pin 16. The lever 12 is connected with the wheel brakes (not shown) on one axle/end of the vehicle, usually the rear, by means of a cable or other linkage (not shown). When the handbrake lever 12 is raised to a brake-on position, the cable is tensioned by cable grip 52C to apply the wheel brakes. A moulded handgrip having finger grooves on its lower side may be fitted to the outside of the handgrip portion 18 of the lever.

The handbrake lever assembly 10 includes a lock mechanism in the form of a ratchet 20 to releasably hold the lever 12 in a brake-on position. The lock mechanism is released by means of a release button 22, which projects from the end of the handgrip portion 18; and which is depressed to selectively disengage the ratchet 20. Movement of the button 22 is transmitted to the ratchet by means of a pushrod 24, part of which extends through the centre of the handgrip portion 18 of the lever; and is connected with the release button 22. The release button 22 may be integral with the pushrod 24, but is often a separate component rigidly fixed to the pushrod so that it can be given a decorative finish, e.g. chrome plating; whereas the pushrod 24, being hidden from view, has a plain finish.

The inner end of the pushrod 24 is pivotally connected by means of a ball and socket arrangement 26 with a first end of a locking pawl 28 of the ratchet 20. The pawl 28 is pivotally mounted to the lever 12 by means of a pivot pin 30. A second end of the pawl 28 includes a pawl tooth 32 that cooperates with an array of ratchet teeth 34 mounted to the bracket 14. The pushrod 24, and hence the release button 22, is biased in an outward direction to a position in which the pawl tooth 32 is engaged with the ratchet teeth 34 by means of a coil spring 36 operatively located between abutments on the pushrod 24 and lever 12 respectively.

To apply the handbrake, button 22 is pushed inwardly against the bias of the spring 36, to move the pushrod 24 inwardly; and hence, to pivot the pawl 28 in a clockwise direction (as shown), to disengage the pawl tooth 32 from the ratchet teeth 34. The handgrip portion 18 of the lever 12 is pulled up to tension the handbrake cable and hence, to apply the wheel brakes. The button 22 is released, allowing the pushrod 24 to be moved forwardly by the spring 36; so that the pawl 28 is rotated in the opposite (anticlockwise) direction to reengage the pawl tooth 32 with the ratchet teeth 34. When the handbrake lever 12 is released, it will fall slightly until the pawl tooth 32 engages with the nearest tooth in the array of ratchet teeth 34. Such engagement holds the handbrake on and prevents the handbrake lever 12 from falling further. The handbrake can also be applied without releasing pawl 28 by simply pulling the handgrip portion 18 up, and allowing the pawl tooth 32 to ratchet over the ratchet teeth 34; but this is not recommended.

To release the handbrake, lever 12 is raised slightly, while depressing the button 22 to release pawl tooth 32 from the ratchet teeth 34. The lever 12 can then be lowered whilst holding the button 22 in, allowing the handbrake cable to de-tension and hence, to release the wheel brakes. The use of a ratchet 20 as part of the locking arrangement allows the handbrake lever 12 to be held in any one of a range of positions to compensate for wear in the brake linings, and stretching of the brake cable; each of which may result in the brake-on position varying over time.

This known handbrake lever assembly and its operation is familiar to many vehicle users who readily understand its operation, and are accustomed to using this type of lever system when operating a vehicle; say in performing a hill start. However, some users find it difficult to depress the release button; and to hold it depressed whilst the handbrake lever is lowered. This is a particular problem for elderly drivers, or for other drivers who have limited ability to grip; or to apply pressure to the release button.

A further problem with the known handbrake lever assembly is that the need to accommodate the push rod, and the need for the lever to be positioned where it can be easily gripped by the driver, restricts the possible lever configurations that can be adopted, severely limiting the design freedom of the vehicle interior designer.

Electronically actuated parking brake systems have been developed, which avoid the need for a handbrake lever; but these are relatively expensive. Furthermore, some users prefer the ability to manually control a lever actuated parking brake system. One prior art example of an electronically actuated parking brake is provided by document US 2003 111901.

Furthermore, there is always a need to find new ways to protect vehicles from theft, as thieves learn to circumvent existing anti-theft systems.

There is a need then to provide a handbrake which overcomes, or at least mitigates, some or all of the drawbacks of the known handbrake arrangements.

### Summary of the Invention

According to the invention, there is provided a handbrake according to claim 1, comprising a handbrake lever mounted to a bracket for pivotal movement between brake-off and brake-on positions, a lock mechanism for releasably holding the handbrake lever in a brake-on position, and an electronic actuator for releasing the lock mechanism, wherein a control circuit for the electronic actuator includes a switch; and a release button for actuating the switch is located at the free end of the lever; characterized in that the lock mechanism is configured such that the actuator is only able to release the lock mechanism in response to actuation of the switch once the handbrake lever has been raised from a brake-on position.

The switch may be a micro-switch or a Hall Effect switch.

The control circuit may be adapted to be connected with an ignition system of a vehicle to which the handbrake is fitted; the control circuit being configured to activate the actuator to release the lock mechanism in response to actuation of the switch, only if the vehicle ignition system is switched on.

The control circuit may include a control arrangement or system configured to release the lock mechanism only in response to: an input from the switch indicative that the handbrake is to be released, and a secondary input; wherein the control arrangement comprises a sensor, such as a switch or a Hall Effect sensor, for detecting movement of the handbrake lever, the secondary input comprising an input from the sensor indicative that the handbrake lever has been raised slightly from a locked position.

The lock mechanism may comprise an array of ratchet teeth rigidly coupled to one of the bracket and the handbrake lever, and a locking pawl mounted to the other of the handbrake lever and the bracket; the pawl being movable between an engaged position, in which the pawl engages at least one tooth of the array of ratchet teeth; and a disengaged position, in which the pawl does not engage with the array of ratchet teeth; the actuator being operatively connected with the pawl to move the pawl to the disengaged position to release the lock mechanism; characterized in that the lock mechanism is configured such that when the handbrake lever is locked in a brake-on position, the handbrake lever must be raised slightly from the locked brake-on position before the actuator is able to move the pawl to the disengaged position.

The lever may comprise a hand grip portion which includes the release button, the hand grip portion being pivotally connected with the bracket by a main lever portion. The main lever portion may comprise at least one elongate, longitudinal member which is off-set vertically and/or laterally relative to the handgrip portion. In one embodiment, the main lever portion comprises a pair of elongate longitudinal members, the elongate longitudinal members being spaced apart laterally. The main lever portion may include a first lateral member extending between the longitudinal members at one end of the longitudinal members, and a second lateral member extending between the longitudinal members at the other end of the longitudinal members; the handgrip portion being mounted to the first lateral member.

A vehicle having a handbrake according to the invention is also disclosed.

Where the handbrake has a control arrangement, the handbrake control arrangement may form part of a control system of the vehicle.

The handbrake control arrangement may also form part of an anti-theft system of the vehicle.

The handbrake control circuit may be operatively connected with the ignition system of the vehicle.

Where the handbrake lever has a main lever portion, the main lever portion may be at least partially encased in a trim console, the console defining a storage receptacle at least partly positioned between the two spaced longitudinal members of the main lever portion.

### Detailed Description of the Invention

In order that the invention may be more clearly understood, an embodiment thereof will now be described, by way of example only, with reference to the remaining accompanying drawings, of which:
Figure 2 is a plan view from above of a handbrake actuation assembly forming part of the handbrake according to the invention;
Figure 3 is a part sectional view of the handbrake actuation assembly of Figure 2 along cranked line X-X;
Figure 4 is a plan view similar to Figure 2, showing a storage receptacle installed in the handbrake lever area, the receptacle being shown in section for clarity;
Figure 5 is a part sectional view similar to Figure 3, showing a storage receptacle installed in the handbrake lever area; and
Figure 6 is a schematic view of the control circuit for the handbrake electronic actuator.

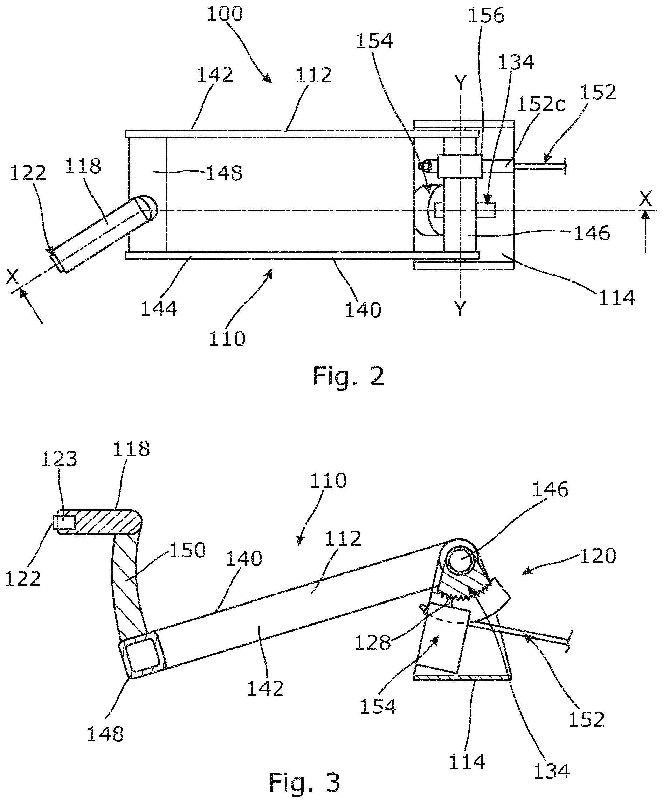

Figures 2 and 3 illustrate an embodiment of a handbrake actuation assembly 100 in accordance with the invention.

The handbrake actuation assembly 100 comprises a handbrake lever assembly 110. The handbrake lever assembly 110 includes a handbrake lever 112 pivotally mounted to a bracket 114 for rotation about an axis Y-Y. The bracket 114 is attachable to a floor assembly of a vehicle (not shown), usually by welding or being bolted.

The handbrake lever 112 includes a tubular handgrip portion 118 that can be grasped by a user. (It will be noted that handgrip 118 is shown at an angle to the majority of axis X-X, the reason for this will be discussed later.) The handgrip portion 118 is mounted to a main lever portion 140 which is pivotally attached to the bracket 114. The main lever portion includes a pair of spaced, generally parallel longitudinal members 142, 144. The longitudinal members are interconnected at either end by means of lateral members in the form of pins or crossbars 146, 148. The lateral pin 146 at the bracket end of the longitudinal members 142, 144 may also function as a pivot pin for mounting the lever to the bracket.

However, other arrangements for pivotally connecting the handbrake lever 112 to the bracket 114 can be used. The handgrip 118 is mounted to the lateral pin member 148 at the end of the longitudinal members 142, 144 distal from the bracket 114. The handgrip portion 118 is mounted to the distal lateral pin member 148 by means of a generally upright portion 150, so that the handgrip portion 118 is elevated relative to the main lever portion 140. The longitudinal members 142, 144 are made from relatively thin planar material so as to occupy only a small amount of room in a lateral direction of the handbrake assembly, and within a vehicle interior in which the handbrake actuation assembly is mounted.

The handgrip portion 118 of the lever 112 can be grasped by a user and pulled upwardly, to move the lever from a lowered brake-off position to a raised brake-on position, by rotating the lever about its pivotal connection 146 with the bracket 114. The lever 112 is connected with the wheel brakes (not shown) on one axle/end of the vehicle, usually the rear, by means of a cable or other linkage 152, which is gripped by an arm 156 and clamp member 152C attached to pin 146. (Parts 156 and 152C are not shown in Figure 3 for clarity.) When the handbrake lever 112 is raised to a brake-on position, the cable or linkage 152 is tensioned to apply the wheel brakes. A moulded handgrip having finger grooves on its lower side may be fitted to the outside of the handgrip portion 118 of the lever.

The handbrake lever assembly 110 includes a lock mechanism in the form of an electronically disengagable ratchet 120 to releasably hold the lever 112 in an elevated brake-on position. Ratchet 120 therefore operates in a manner similar to the ratchet 20 used in the prior art handbrake assembly previously described. The lock ratchet 120 includes an array of teeth 134 rigidly attached to the proximal lateral pin member 146 which is constrained to rotate with the lever 112. A solenoid actuated locking pawl 128 is biased by means of a return spring of the solenoid 154 to a position in which it engages with the teeth in the array 134 to prevent the lever 112 rotating in a downward, brake-off direction. When the handbrake lever 112 is locked in an elevated brake-on position, it can be released by energising the solenoid 154 to withdraw the pawl 128, so that it no longer engages with the teeth in the array 134.

Operation of the solenoid to disengage the lock is controlled by means of a release button 122, which is located at the free distal end of the handgrip portion 118 in a manner similar to the release button 22 in a conventional handbrake lever assembly. However, in the handbrake 100 in accordance with the invention, the release button 122 is not mechanically linked to the pawl 128; but rather is used to operate a switch 123, which actuates the solenoid 154 to withdraw pawl 128 when the handbrake is to be released. The switch may be a micro-switch, or it may be a Hall Effect switch; or indeed, any other suitable switch. Use of a Hall Effect switch has the advantage that there are no moving contacts, minimizing the effects of wear, corrosion, and arcing. The switch forms part of a control circuit for controlling actuation of the solenoid 154, said circuit being arranged so that actuation of the switch by depressing the release button 122 causes the solenoid 154 to be energised to release the locking pawl 128.

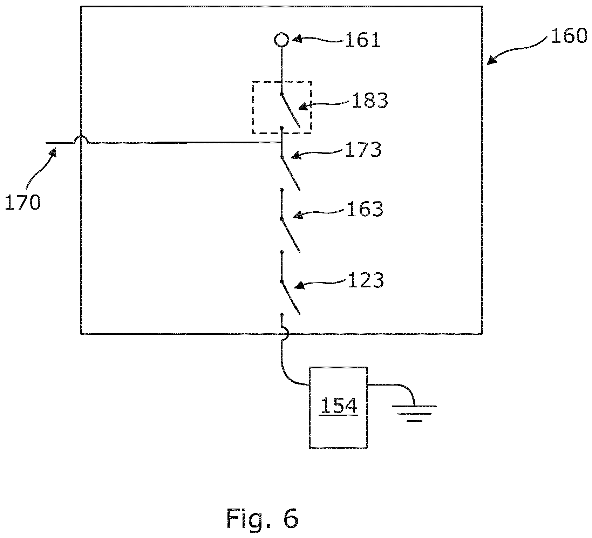

The control circuit, including the solenoid 154 and the control switch, is connected to the electrical and control system of the vehicle; and may be connected in such a way that the solenoid 154 cannot be energised unless the vehicle ignition system is in the "on" position (see description of Figure 6 below). This provides a useful safety backup to help to prevent inadvertent release of the handbrake 100 when the vehicle is parked, due say to something accidentally brushing against the release button 122; for example, a dog, or an insufficiently restrained child, left in the vehicle in the absence of the driver. It also allows the handbrake to form part of an anti-theft system, particularly by making it harder to tow the vehicle away should all other techniques used to attempt to steal it fail.

Preferably, the solenoid 154 and control switch should be connected to the vehicle's electronic system so as to allow release of the handbrake provided the ignition is in the "on" position; but not necessarily requiring the engine to be running. This would allow for release of the handbrake during servicing, breakdown and accident recovery; and in any other situations where it may be necessary to release the handbrake when the engine is not running.

To provide for a further safety backup, the handbrake 100 is configured so that the pawl 128 can only be withdrawn from the array of teeth 134 by the solenoid 154 once the handbrake lever has been raised slightly from the locked brake-on position. It is highly unlikely that the lever 112 would be raised accidentally whilst the release button 122 is also depressed to inadvertently release the handbrake. Therefore, the handbrake 100 is configured so that the solenoid 154 does not apply sufficient force to the pawl 128 to disengage it from the array of teeth 134, unless the handbrake lever 112 is first raised slightly to reduce the frictional forces on the pawl 128. This has the advantage of only requiring a relatively simple control system for the handbrake 100.

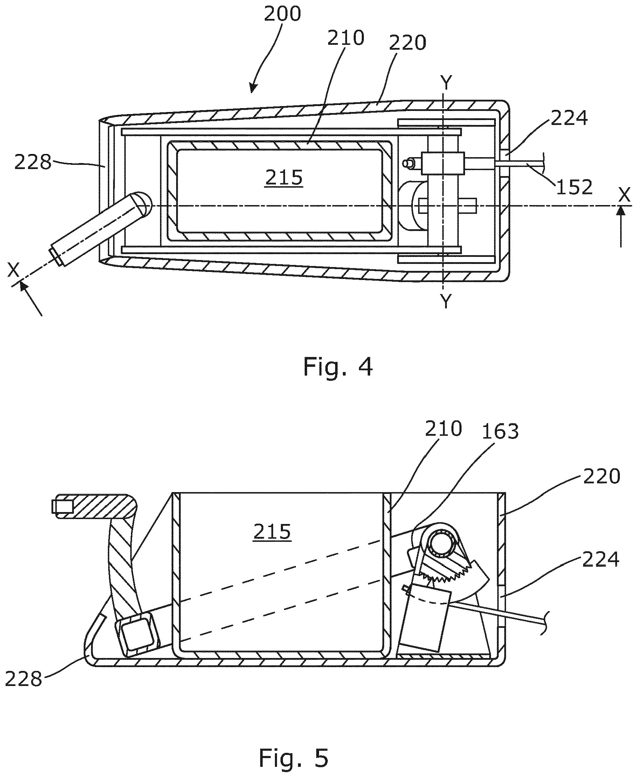

The handbrake is provided with a sensor (see item 163 in Figure 5) for detecting movement of the handbrake lever 112; while the control circuit includes control means arranged so that the solenoid 154 can only be energised when the vehicle ignition system is switched on, the release button 122 is depressed to actuate the switch, and an input is received indicative that the handbrake lever has been raised from the locked brake-on position. The sensor for detecting movement of the handbrake lever could be in the form of a switch, which is either closed or opened when the lever is raised, or it could be in the form of a Hall Effect switch, or a suitable sensor. Switch 123 provides a first input indicative that the handbrake is to be released and the sensor provides a secondary input, both inputs being required before the handbrake can be released.

Other types of secondary input could be used to ensure that the handbrake is not inadvertently released. For example, a user may be required to operate a further switch, say on the dashboard (see item 183 in Figure 6), as well the switch on the handbrake lever before the solenoid 154 can be energised. In this case, it is not necessary that the two switches be actuated simultaneously. The user may be required to actuate the further switch only once after the ignition has been turned on in order to active the handbrake release system. Once activated, the handbrake can be released and re-applied as many times as is required, using only the release button 122 on the handbrake lever 112, until the ignition is next switched off. Each time the ignition is switched on, the handbrake release system would have to be reactivated by using the further switch. Those skilled in the art will appreciate that there are numerous ways in which suitable safety backup systems can be configured to reduce the risk of the handbrake 100 being inadvertently released; but without making the system too onerous for the user.

When the handbrake is applied, it is preferable that the solenoid 154 is actuated to withdraw the pawl 128 as the handbrake lever is raised. However, the handbrake lever can be raised without withdrawing the pawl, which then ratchets over the teeth 134 in a known manner.

The handbrake 100 in accordance with the invention has the advantage that it closely resembles a conventional handbrake lever arrangement but requires only minimal force to be applied to the release button 122 by a user. The handbrake therefore offers the familiarity of a conventional handbrake lever arrangement, but is considerably easier to operate.

In the handbrake 100 in accordance with the invention, the control switch 123 actuated by the release button 122 can be connected with the solenoid by means of wires that pass through the handgrip portion 118 and the vertical portion 150; and which can then be conveniently routed along one of the longitudinal members 142, 144. Because the handbrake 100 in accordance with the invention does not require the presence of a central push rod to connect the release button 122 with the locking pawl 128, there is much greater freedom in designing the lever.

It may be advantageous for the handgrip portion 118 to be offset vertically, laterally, and/or at an angle (as shown in Figure 2) to the longitudinal members 142, 144. This is feasible because the release button 122 is only connected to pawl 128 by an electric circuit; so it is not necessary to have a straight, centrally located pushrod as shown at 24 in Figure 1. This offers advantages not just in packaging, but also in ergonomically correct design, to enhance the driver's experience in operating the vehicle. For example in Figure 2, handgrip 118 is shown at an angle to the longitudinal axis of the vehicle, which some users may find makes handgrip 118 easier to grip and to move. It is even conceivable that the handgrip could be rotationally adjustable to maximize driver convenience.

In the present embodiment for example, the handgrip portion 118 is elevated relative to the main lever portion 140. This means that the main lever portion can be accommodated below or within a central console (see Figures 4 and 5), with only the handgrip portion 118 and the vertical member 150 being exposed in the passenger compartment. The main lever portion 140 being comprised of relatively thin longitudinal members that are spaced apart laterally, provides room between the members in which the console can define a storage receptacle in space that would typically be occupied by the conventional handbrake lever and push rod mechanism. The ability to use space within the vehicle efficiently is particularly important in smaller vehicles where storage space is at a premium. Those skilled in the art will appreciate that the handbrake lever 112 could be designed in numerous different ways to make the best use of the available space.

Figures 4 and 5 show how the substantial space bounded by members 142 and 144, crossbar 148, and solenoid 154, may be occupied by a trim console 200 comprising a storage box or receptacle 215, typically made of moulded plastic (this construction being omitted from Figures 2 and 3 for clarity). The box 215 comprises an inner wall 210, with a cosmetic interior finish, and internal divisions as may be required; and an outer wall 220, which encases the longitudinal members 142 and 144, so that they do not snag on vehicle occupants' clothing during operation of the handbrake lever 112. A clearance hole 224 allowing the handbrake cable 152 to be tensioned and de-tensioned is shown, also a curved skirt 228 at the front of outer wall 220. The trim console 200 could also comprise a padded and/or moulded cover (not shown), acting as an armrest for the driver and/or passenger.

Figure 6 shows a schematic view of a control circuit for the handbrake electronic actuator 154. Numeral 161 represents a power source (typically +12V), while 183 represents a dashboard-mounted master switch (where this is fitted). Numeral 173 represents a switch actuated remotely from ignition circuit 170. This remote operation allows the high voltages and currents used in the ignition circuit to be kept away from the handbrake control circuit. Numeral 163 represents a sensor, such as a Hall sensor, also shown in block form in Figure 5; this detects the raising of the handbrake lever which is required before the handbrake can be released, for safety reasons. Finally, 123 represents the switch behind button 122 in the handbrake lever. It is clear from this Figure that there are several levels of safeguards for handbrake release, with three or four switches having to be in the "on" position before the handbrake can be released by actuator 154.

The terms "lateral" or "laterally" are used herein to mean in a side to side direction relative to the handbrake lever, parallel to axis Y-Y in Figure 2; which typically coincides with a side to side direction, or transverse axis, of a vehicle in which the lever is mounted.

Whilst the invention has been described in relation to a handbrake having a handbrake lever assembly with a ratchet mechanism for locking the handbrake lever in the brake-on position, it will be appreciated that the invention can be adapted for use with handbrake assemblies that use alternative lock mechanisms that are electronically released by means of an actuator, such as a solenoid; which is activated in response to depressing a release button at the end of the handbrake lever to operate a switch.

The above embodiment is described by way of example only. Many variations are possible without departing from the scope of the invention as defined in the appended claims. For example, whilst it is convenient to use a solenoid as the actuator 154 for withdrawing the pawl 128, other types of actuator could be used.

## Claims

1. A handbrake (100) comprising a handbrake lever (112) mounted to a bracket (114) for pivotal movement between brake-off and brake-on positions, a lock mechanism (120) for releasably holding the handbrake lever (112) in a brake-on position, and an electronic actuator (154) for releasing the lock mechanism, wherein a control circuit (160) for the electronic actuator includes a switch (123), and a release button (122) for actuating the switch is located at a free end of the lever (112);
**characterized in that**:
the lock mechanism is configured such that the actuator (154) is only able to release the lock mechanism (120) in response to actuation of the switch once the handbrake lever (112) has been raised from a brake-on position.

2. A handbrake (100) as claimed in claim 1, wherein the switch (123) is a micro-switch.

3. A handbrake (100) as claimed in claim 1, wherein the switch (123) is a Hall Effect switch.

4. A handbrake (100) as claimed in any one of the preceding claims, in which the control circuit (160) is adapted to be connected with an ignition system (170) of a vehicle to which the handbrake (100) is fitted; the control circuit being configured to activate the actuator (154) to release the lock mechanism (120) in response to actuation of the switch (123) only if the vehicle ignition system (170) is switched on.

5. A handbrake (100) as claimed in any one of the preceding claims, wherein the control circuit (160) includes a control arrangement configured to release the lock mechanism (120) only in response to:
an input from the switch (123) indicative that the handbrake (100) is to be released, and a secondary input;
wherein the control arrangement comprises a sensor (163) for detecting movement of the handbrake lever (112), the secondary input comprising an input from the sensor indicative that the handbrake lever (112) has been raised slightly from a locked brake-on position.

6. A handbrake (100) as claimed in any one of the preceding claims, wherein the lock mechanism (120) comprises an array of ratchet teeth (134) rigidly coupled to one of the bracket (114) and the handbrake lever (112), and a locking pawl (128) mounted to the other of the handbrake lever and the bracket;
the pawl being movable between an engaged position, in which the pawl (128) engages at least one tooth of the array of ratchet teeth (134);
and a disengaged position, in which the pawl does not engage with the array of ratchet teeth;
the actuator (154) being operatively connected with the pawl to move the pawl (128) to the disengaged position to release the lock mechanism (120);
**characterized in that**:
the lock mechanism (120) is configured such that when the handbrake lever (112) is locked in a brake-on position, the handbrake lever must be raised slightly from the locked brake-on position before the actuator (154) is able to move the pawl (128) to the disengaged position.

7. A handbrake (100) as claimed in any one of the preceding claims, wherein the lever comprises a hand grip portion (118) which includes the release button (122), the hand grip portion being pivotally connected with the bracket (114) by a main lever portion (140).

8. A handbrake (100) as claimed in claim 7, wherein the main lever portion (140) comprises at least one elongate, longitudinal member (142, 144) which is off-set in a vertical and/or lateral direction relative to the hand grip portion (118).

9. A handbrake (100) as claimed in claim 8, wherein the main lever portion (140) comprises a pair of elongate longitudinal members (142, 144), the elongate longitudinal members being spaced apart laterally.

10. A handbrake (100) as claimed in claim 9, wherein the main lever portion (140) comprises a first lateral member (148) extending between the longitudinal members (142, 144) at one end of the longitudinal members, and a second lateral member (146) extending between the longitudinal members at the other end of the longitudinal members; the hand grip portion (118) being mounted to the first lateral member.

11. A vehicle having a handbrake (100) according to any one of claims 1 to 10.

12. A vehicle as claimed in claim 11 when dependent on claim 5, wherein the handbrake control arrangement forms part of a control system of the vehicle.

13. A vehicle as claimed in claim 11 when dependent on claim 5, wherein the handbrake control arrangement forms part of an anti-theft system of the vehicle.

14. A vehicle as claimed in any one of claims 11 to 13 when dependent on claim 4, wherein the handbrake control circuit (160) is operatively connected with the ignition system (170) of the vehicle.

15. A vehicle comprising a handbrake (100) as claimed in claim 9 or claim 10, wherein the main lever portion (140) is at least partially encased in a trim console (200), the console defining a storage receptacle (215) at least partly positioned between the two longitudinal members (142, 144).

## Patentansprüche

1. Handbremse (100), umfassend einen Handbremshebel (112), der an einer Halterung (114) zur Schwenkbewegung zwischen den Positionen "Bremse aus" und "Bremse ein" montiert ist, einen Verriegelungsmechanismus (120) zum lösbaren Halten des Handbremshebels (112) in einer Position "Bremse ein" und einen elektronischen Antrieb (154) zum Lösen des Verriegelungsmechanismus, wobei eine Steuerschaltung (160) für den elektronischen Antrieb einen Schalter (123) umfasst, und sich ein Entriegelungsknopf (122) zum Betätigen des Schalters an einem freien Ende des Hebels (112) befindet;
**dadurch gekennzeichnet, dass**:
der Verriegelungsmechanismus so konfiguriert ist, dass der Antrieb (154) den Verriegelungsmechanismus (120) nur als Reaktion auf die Betätigung des Schalters lösen kann, wenn der Handbremshebel (112) aus einer Position "Bremse ein" hochgezogen wurde.

2. Handbremse (100) nach Anspruch 1, wobei der Schalter (123) ein Mikroschalter ist.

3. Handbremse (100) nach Anspruch 1, wobei der Schalter (123) ein Hall-Effekt-Schalter ist.

4. Handbremse (100) nach einem der vorhergehenden Ansprüche, wobei die Steuerschaltung (160) ausgelegt ist, um mit einer Zündanlage (170) eines Fahrzeugs verbunden zu sein, an dem die Handbremse (100) befestigt ist; wobei die Steuerschaltung konfiguriert ist, um den Antrieb (154) zu aktivieren, den Verriegelungsmechanismus (120) als Reaktion auf die Betätigung des Schalters (123) nur dann zu lösen, wenn die Fahrzeugzündanlage (170) eingeschaltet wird.

5. Handbremse (100) nach einem der vorhergehenden Ansprüche, wobei die Steuerschaltung (160) eine Steueranordnung umfasst, die konfiguriert ist, um den Verriegelungsmechanismus (120) nur als Reaktion auf:
eine Eingabe von dem Schalter (123), der anzeigt, dass die
Handbremse (100) gelöst werden soll, und auf eine zweite Eingabe zu lösen,
wobei die Steueranordnung einen Sensor (163) zum Erkennen einer Bewegung des Handbremshebels (112) umfasst, wobei die zweite Eingabe eine Eingabe von dem Sensor umfasst, die anzeigt, dass der Handbremshebel (112) leicht aus einer verriegelten Position "Bremse ein" hochgezogen wurde.

6. Handbremse (100) nach einem der vorhergehenden Ansprüche, wobei der Verriegelungsmechanismus (120) eine Anordnung von Sperrzähnen (134) umfasst, die starr an einem von der Halterung (114) und dem Bremshebel (112) gekoppelt sind, und eine Sperrklinke (128), die an den anderen von dem Handbremshebel und der Halterung montiert ist;
wobei die Klinke zwischen einer eingerasteten Position, in der die Klinke (128) mindestens einen Zahn der Anordnung von Sperrzähnen (134) in Eingriff bringt,
und einer ausgerasteten Position, in der die Klinke nicht mit der Anordnung von Sperrzähnen eingreift, bewegbar ist;
wobei der Antrieb (154) mit der Klinke wirkverbunden ist, um die Klinke (128) in die ausgerastete Position zu bewegen, um den Verriegelungsmechanismus (120) zu lösen, **dadurch gekennzeichnet, dass**:
der Verriegelungsmechanismus (120) so konfiguriert ist, dass bei Verriegelung des Handbremshebels (112) in einer Position "Bremse ein" der Handbremshebel leicht aus der verriegelten Position "Bremse ein" hochgezogen werden muss, bevor der Antrieb (154) die Klinke (128) in die ausgerastete Position bewegen kann.

7. Handbremse (100) nach einem der vorhergehenden Ansprüche, wobei der Hebel einen Handgriffabschnitt (118) umfasst, der den Entriegelungsknopf (122) enthält, wobei der Handgriffabschnitt schwenkbar mit der Halterung (114) durch einen Haupthebelabschnitt (140) verbunden ist.

8. Handbremse (100) nach Anspruch 7, wobei der Haupthebelabschnitt (140) mindestens ein längliches Längselement (142, 144) umfasst, das in vertikaler und/oder seitlicher Richtung relativ zu dem Handgriffabschnitt (118) versetzt ist.

9. Handbremse (100) nach Anspruch 8, wobei der Haupthebelabschnitt (140) ein Paar längliche Längselemente (142, 144) umfasst, wobei die länglichen Längselemente seitlich beabstandet sind.

10. Handbremse (100) nach Anspruch 9, wobei der Haupthebelabschnitt (140) ein erstes seitliches Element (148) umfasst, das sich zwischen den Längselementen (142, 144) an einem Ende der Längselemente erstreckt, und ein zweites seitliches Element (146), das sich zwischen den Längselementen am anderen Ende der Längselemente erstreckt; wobei der Handgriffabschnitt (118) an dem ersten seitlichen Element montiert ist.

11. Fahrzeug mit einer Handbremse (100) nach einem der Ansprüche 1 bis 10.

12. Fahrzeug nach Anspruch 11 in Abhängigkeit von Anspruch 5, wobei die Steueranordnung der Handbremse Teil eines Steuersystems des Fahrzeugs ist.

13. Fahrzeug nach Anspruch 11 in Abhängigkeit von Anspruch 5, wobei die Steueranordnung der Handbremse Teil eines Antidiebstahlsystems des Fahrzeugs ist.

14. Fahrzeug nach einem der Ansprüche 11 bis 13 in Abhängigkeit von Anspruche 4, wobei die Steuerschaltung (160) der Handbremse mit der Zündanlage (170) des Fahrzeugs wirkverbunden ist.

15. Fahrzeug, umfassend eine Handbremse (100) nach Anspruch 9 oder Anspruch 10, wobei der Haupthebelabschnitt (140) mindestens teilweise in einer verkleideten Konsole (200) eingeschlossen ist, wobei die Konsole einen Aufbewahrungsbehälter (215) definiert, der mindestens teilweise zwischen den zwei Längselementen (142, 144) positioniert ist.

## Revendications

1. Frein à main (100) comprenant un levier de frein à main (112) monté sur un support (114) pour un mouvement de pivotement entre des positions de desserrage de frein et de serrage de frein, un mécanisme de verrouillage (120) pour maintenir de manière libérable le levier de frein à main (112) dans une position de serrage de frein, et un actionneur électronique (154) pour libérer le mécanisme de verrouillage, un circuit de commande (160) pour l'actionneur électronique incluant un commutateur (123), et un bouton de libération (122) pour actionner le commutateur étant situé au niveau d'une extrémité libre du levier (112) ; **caractérisé en ce que** :
le mécanisme de verrouillage est configuré de sorte que l'actionneur (154) est seulement capable de libérer le mécanisme de verrouillage (120) en réponse à l'actionnement du commutateur une fois que le levier de frein à main (112) a été levé à partir d'une position de serrage de frein.

2. Frein à main (100) selon la revendication 1, dans lequel le commutateur (123) est un micro-commutateur.

3. Frein à main (100) selon la revendication 1, dans lequel le commutateur (123) est un commutateur à effet Hall.

4. Frein à main (100) selon l'une quelconque des revendications précédentes, dans lequel le circuit de commande (160) est adapté pour être raccordé à un système de contact (170) d'un véhicule auquel le frein à main (100) est adapté ; le circuit de commande étant configuré pour activer l'actionneur (154) afin de libérer le mécanisme de verrouillage (120) en réponse à l'actionnement du commutateur (123) seulement si le système de contact du véhicule (170) est en marche.

5. Frein à main (100) selon l'une quelconque des revendications précédentes, dans lequel le circuit de commande (160) inclut un agencement de commande configuré pour libérer le mécanisme de verrouillage (120) seulement en réponse à :
une entrée provenant du commutateur (123) indiquant que le frein à main (100) doit être libéré, et une entrée secondaire ;
l'agencement de commande comprenant un capteur (163) pour détecter un mouvement du levier de frein à main (112), l'entrée secondaire comprenant une entrée provenant du capteur indiquant que le levier de frein à main (112) a été levé légèrement à partir d'une position de serrage de frein verrouillée.

6. Frein à main (100) selon l'une quelconque des revendications précédentes, dans lequel le mécanisme de verrouillage (120) comprend un réseau de dents d'ancrage (134) couplé de manière rigide à l'un du support (114) et du levier de frein à main (112), et un cliquet de verrouillage (128) monté sur l'autre du levier de frein à main et du support ;
le cliquet étant mobile entre une position engagée, dans laquelle le cliquet (128) engage au moins une dent du réseau de dents d'ancrage (134) ;
et une position désengagée, dans laquelle le cliquet ne vient pas en prise avec le réseau de dents d'ancrage ;
l'actionneur (154) étant raccordé de manière opérationnelle au cliquet pour déplacer le cliquet (128) vers la position désengagée afin de libérer le mécanisme de verrouillage (120) ; **caractérisé en ce que** :
le mécanisme de verrouillage (120) est configuré de sorte que, lorsque le levier de frein à main (112) est verrouillé dans une position de serrage de frein, le levier de frein à main doit être levé légèrement à partir de la position de serrage de frein verrouillée avant que l'actionneur (154) soit capable de déplacer le cliquet (128) vers la position désengagée.

7. Frein à main (100) selon l'une quelconque des revendications précédentes, dans lequel le levier comprend une partie de poignée manuelle (118) qui inclut le bouton de libération (122), la partie de poignée manuelle étant raccordée de manière pivotante au support (114) par une partie de levier principale (140).

8. Frein à main (100) selon la revendication 7, dans lequel la partie de levier principale (140) comprend au moins un élément longitudinal allongé (142, 144) qui est décalé dans une direction verticale et/ou latérale par rapport à la partie de poignée manuelle (118).

9. Frein à main (100) selon la revendication 8, dans lequel la partie de levier principale (140) comprend une paire d'éléments longitudinaux allongés (142, 144), les éléments longitudinaux allongés étant espacés latéralement.

10. Frein à main (100) selon la revendication 9, dans lequel la partie de levier principale (140) comprend un premier élément latéral (148) s'étendant entre les éléments longitudinaux (142, 144) au niveau d'une extrémité des éléments longitudinaux, et un second élément latéral (146) s'étendant entre les éléments longitudinaux au niveau de l'autre extrémité des éléments longitudinaux ; la partie de poignée manuelle (118) étant montée sur le premier élément latéral.

11. Véhicule présentant un frein à main (100) selon l'une quelconque des revendications 1 à 10.

12. Véhicule selon la revendication 11 lorsqu'elle dépend de la revendication 5, dans lequel l'agencement de commande de frein à main forme une partie d'un système de commande du véhicule.

13. Véhicule selon la revendication 11 lorsqu'elle dépend de la revendication 5, dans lequel l'agencement de commande de frein à main forme une partie d'un système antivol du véhicule.

14. Véhicule selon l'une quelconque des revendications 11 à 13 lorsqu'elles dépendent de la revendication 4, dans lequel le circuit de commande de frein à main (160) est raccordé de manière opérationnelle au système de contact (170) du véhicule.

15. Véhicule comprenant un frein à main (100) selon la revendication 9 ou la revendication 10, dans lequel la partie de levier principale (140) est au moins partiellement encastrée dans une console de garniture (200), la console définissant un réceptacle de stockage (215) au moins partiellement positionné entre les deux éléments longitudinaux (142, 144).
